# EUROPEAN PATENT APPLICATION

(11) **EP 4 768 893 A1**
(43) Date of publication of application: **01.07.2026**
(21) Application number: 25800311.0
(22) Date of filing: 22.10.2025
(51) Int. Cl.: G01N 17/00

(54) **SUPERCRITICAL CO2 CORROSION TEST SYSTEM AND TEST METHOD THEREFOR**

(30) Priority: 30.10.2024 CN 202411534734
(71) Applicant: China Institute of Atomic Energy, Beijing 102413 (CN)
(72) Inventor: YANG, Wanhuan, Beijing 102413 (CN); QIAO, Pengrui, Beijing 102413 (CN); ZHAO, Xueli, Beijing 102413 (CN); LI, Shen, Beijing 102413 (CN); WANG, Zhihao, Beijing 102413 (CN); ZOU, Jichun, Beijing 102413 (CN); CHEN, Shuai, Beijing 102413 (CN); PENG, Dequan, Beijing 102413 (CN); YANG, Wen, Beijing 102413 (CN); ZHU, Qingfu, Beijing 102413 (CN); ZHONG, Weihua, Beijing 102413 (CN)
(74) Representative: Stöckeler, Ferdinand
(86) International application number: PCT/CN2025/129266
(87) International publication number: WO 2026/092262

(57) **Abstract**

Embodiments of the present disclosure relate to the technical field of testing corrosion resistance of materials, and specifically to a system and method for performing a supercritical CO₂ corrosion test. The system for performing a supercritical CO₂ corrosion test includes a sample loading device, a pressure regulating valve, and an auxiliary pressure regulating member. The sample loading device is configured to have a sample chamber for accommodating a sample, where the sample chamber is further configured to receive a supercritical CO₂ fluid so that the sample in the sample chamber undergoes a corrosion test under a supercritical CO₂ atmosphere. The pressure regulating valve is disposed downstream of the sample chamber along a flow direction of the supercritical CO₂ fluid to regulate a pressure inside the sample chamber so that the sample in the sample chamber is tested under a first preset pressure. The auxiliary pressure regulating member is configured to increase a pressure at an outlet of the pressure regulating valve. According to embodiments of the present disclosure, by providing the auxiliary pressure regulating member, the pressure difference between the inlet and outlet of the pressure regulating valve is reduced, ensuring a precise regulation of the pressure inside the sample chamber by the pressure regulating valve.

## Description

### TECHNICAL FIELD

Embodiments of the present disclosure relate to the technical field of testing corrosion resistance of materials, and specifically to a system and method for performing a supercritical CO₂ corrosion test.

### BACKGROUND

The statements herein merely provide background information related to the present disclosure and do not necessarily constitute prior art.

A supercritical carbon dioxide (S-CO₂) Brayton power conversion system is a new generation of power generation technology. In nuclear power conversion systems, supercritical CO₂ typically has characteristics such as high temperature, high pressure, and high flow rate, which may cause corrosion to materials and consequently affect the safe and efficient operation of apparatus. Performing a supercritical CO₂ corrosion test on materials may provide a powerful basis for material selection, and proper material selection may effectively control the construction cost of reactor apparatus. Therefore, performing a supercritical CO₂ corrosion test on materials is of great significance.

At present, systems for performing a supercritical CO₂ corrosion test on materials already exist. However, existing systems for performing the supercritical CO₂ corrosion test usually have difficulty in precisely controlling a pressure inside a sample chamber.

### SUMMARY

A brief summary of the present disclosure is given hereinafter to provide a basic understanding of some aspects of the present disclosure. It should be understood that this summary is not an exhaustive overview of the present disclosure. It is not intended to identify key or critical elements of the present disclosure, nor is it intended to define the scope of the present disclosure. Its purpose is merely to present some concepts in a simplified form as a prelude to the more detailed description that follows.

In a first aspect, embodiments of the present disclosure provide a system for performing a supercritical CO₂ corrosion test, including: a sample loading device configured to have a sample chamber for accommodating a sample, where the sample chamber is further configured to receive a supercritical CO₂ fluid so that the sample in the sample chamber undergoes a corrosion test under a supercritical CO₂ atmosphere; a pressure regulating valve disposed downstream of the sample chamber along a flow direction of the supercritical CO₂ fluid, where the pressure regulating valve is configured to regulate a pressure inside the sample chamber so that the sample in the sample chamber is tested under a first preset pressure; and an auxiliary pressure regulating member configured to increase a pressure at an outlet of the pressure regulating valve.

In a second aspect, embodiments of the present disclosure provide a method for performing a supercritical CO₂ corrosion test, implemented by using the system in the first aspect of the present disclosure. The method includes: introducing supercritical CO₂ into the sample chamber, where the supercritical CO₂ sequentially flows through the sample chamber, the pressure regulating valve, and the auxiliary pressure regulating member before being discharged into the atmospheric environment; regulating the pressure regulating valve so that a pressure inside the sample chamber is maintained at a first preset pressure; regulating the auxiliary pressure regulating member so that a pressure at an outlet of the pressure regulating valve is maintained at a second preset pressure, where the second preset pressure is lower than the first preset pressure and higher than an atmospheric pressure; and performing a supercritical CO₂ corrosion test.

According to embodiments of the present disclosure, by providing the auxiliary pressure regulating member, the pressure at the outlet of the pressure regulating valve may be increased, thereby reducing the pressure difference between the inlet and outlet of the pressure regulating valve. This avoids occurrence of vaporization phase transition of supercritical CO₂ at the pressure regulating valve which would otherwise cause a rapid temperature drop of the pressure regulating valve, thus ensuring a precise control of the pressure inside the sample chamber by the pressure regulating valve.

### BRIEF DESCRIPTION OF THE DRAWINGS

Other objectives and advantages of the present disclosure will become apparent from the following description of embodiments of the present application with reference to the accompanying drawings, which may help to provide a comprehensive understanding of the present disclosure.
FIG. 1 shows a schematic diagram of a principle of a system for performing a supercritical CO₂ corrosion test according to an embodiment of the present disclosure.
FIG. 2 shows a cross-sectional view of a sample loading device according to an embodiment of the present disclosure.
FIG. 3 shows a partial enlarged view of a sample chamber of the sample loading device in FIG. 2.
FIG. 4 shows a cross-sectional view of a sample retaining assembly according to an embodiment of the present disclosure.
FIG. 5 shows an exploded view of a sample retaining assembly according to an embodiment of the present disclosure.
FIG. 6 shows a top view of a retaining member according to an embodiment of the present disclosure.
FIG. 7 shows a schematic structural diagram of a pressure regulating valve and an auxiliary pressure regulating member.

### List of Reference Numerals:

1 - Sample loading device;
10 - Sample chamber;
20 - Gas inlet interface;
30 - Gas outlet interface;
40 - Sample retaining assembly; 41 - Retaining member; 411 - Positioning slot set; 4111 - Positioning slot; 41111 - Middle slot section; 41112 - End slot section; 412 - Core portion; 413 - Extension portion; 414 - Central mounting hole; 415 - Retaining-member outer mounting hole; 42 - Connection assembly; 421 - Connection sleeve member; 4211 - Sleeve body; 4212 - Engaging portion; 422 - Connection mating member; 423 - Fastener; 424 - Spacer member; 4241 - Spacer-member mounting hole; 425 - Connecting member;
50 - Sample;
60 - Rotational driving member; 61 - Rotating shaft; 611 - Rotating-shaft interface; 62 - Rotating drum; 621- Magnet; 622 - Connecting cylinder; 63 - Rotating-drum cooling member; 64 - Rotating-shaft cooling member; 641 - First cooling connection portion; 642 - Second cooling connection portion; 643 - Cooling body; 65 - Driving mounting member; 66 - Spacer sleeve; 661 - First connection portion; 662 - Second connection portion; 67 - Driving member; 68 - Bearing;
70 - Main body; 701 - Recess; 71 - Cover; 711 - Through hole; 72 - Fixing member; 73 - Stationary sample slot; 74 - Fastener;
80 - Pressure regulating valve; 81 - First temperature measuring member; 82 - First electric heating member;
90 - Auxiliary pressure regulating member; 91 - Auxiliary pressure regulating valve; 92 - Pressure stabilizing vessel; 93 - Pressure measuring member; 94 - Auxiliary temperature measuring member; 95 - Auxiliary electric heating member;
101 - Carbon dioxide gas supply member; 102 - Gas source valve; 103 - Purge valve; 104 - First pressure measuring member; 105 - Precooling member; 106 - Cool water supply member; 107 - Filtering member;
110 - Gas inlet pipeline;
121 - Booster pump; 122 - Valve; 123 - Second pressure measuring member; 124 - Check valve;
131 - Preheating member; 132 - Temperature control member;
141 - Cooling member; 142 - Second temperature measuring member; 143 - Third pressure measuring member; 144 - Exhaust valve; 145 - Rupture disc; 146 - Vent valve;
1001 - Mounting plate; 1002 - First fixing frame; 1003 - Second fixing frame; 1004 - Three-way connector; 1005 - Pressure-stabilizing heating member.

It should be noted that the drawings are not necessarily drawn to scale, but are merely schematic illustrations drawn in a manner that does not affect the reader's understanding.

### DETAILED DESCRIPTION OF EMBODIMENTS

Exemplary embodiments of the present disclosure will be described below with reference to the accompanying drawings. For clarity and brevity, not all features of practical implementations are described in the specification. However, it should be understood that in the process of developing any such practical implementation, numerous implementation-specific decisions must be made to achieve the developer's specific goals, such as compliance with system-related and business-related constraints, and these constraints may vary with different implementations. Moreover, it should be understood that the development efforts may be complex and time-consuming, but would nevertheless be a routine undertaking for those skilled in the art benefiting from the teachings of the present disclosure.

Here, it should also be noted that in order to avoid obscuring the present disclosure with unnecessary details, only the device structures and/or processing steps closely related to the solutions of the present disclosure are shown in the drawings, while other details less relevant to the present disclosure are omitted.

It should be noted that unless otherwise defined, technical terms or scientific terms used in the present disclosure shall have the ordinary meanings understood by those of ordinary skill in the field to which the present disclosure pertains.

In the description of the embodiments of the present disclosure, the term "a plurality of" means at least two, such as two or three, unless otherwise specifically defined.

In systems for performing a high-flow-rate supercritical CO₂ corrosion test in the related art, in order to achieve a high-pressure condition in a sample chamber, a pressure regulating valve (such as a backpressure valve) is typically disposed downstream of the sample chamber. The pressure regulating valve is used to regulate the pressure inside the sample chamber to maintain the high-pressure condition in the sample chamber.

The CO₂ gas discharged from the pressure regulating valve flows directly into the atmosphere. The inventors of the present disclosure found that one side of the pressure regulating valve has the same pressure as the atmosphere, while the other side maintains a pressure up to 25 MPa. Due to the abrupt pressure drop of CO₂ in the valve, the CO₂ may undergo a liquid-to-gas phase transition, absorbing a large amount of heat. This causes a rapid temperature drop of the valve, which easily leads to icing and in turn results in imprecise pressure regulation of the sample chamber by the pressure regulating valve.

In the related art, to solve the above problem, an electric heating member is provided to heat the pressure regulating valve to prevent icing. However, the inventors of the present disclosure found that a cooling rate of the pressure regulating valve is very fast, whereas the electric heating member has a slow heating rate and low response speed, making it difficult to supply sufficient heat within a short period of time to prevent a rapid temperature drop of the pressure regulating valve.

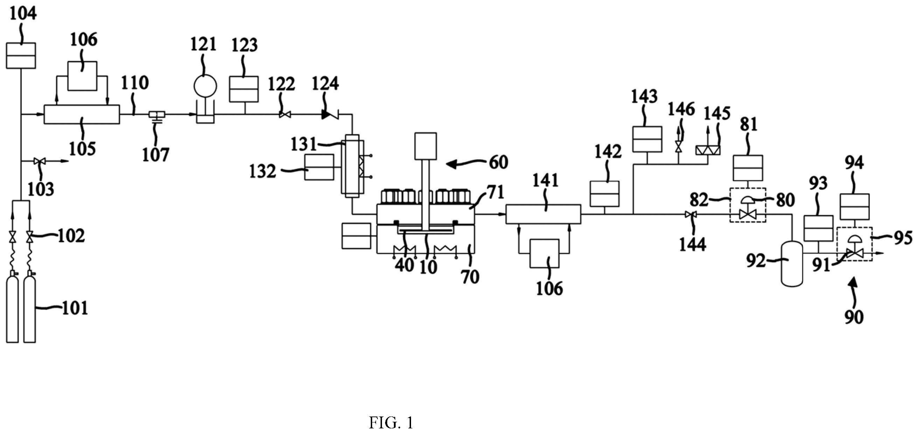

Based on the above, embodiments of the present disclosure provide a system for performing a supercritical CO₂ corrosion test. FIG. 1 shows a schematic diagram of a principle of a system for performing a supercritical CO₂ corrosion test according to an embodiment of the present disclosure. As shown in FIG. 1, the system for performing a supercritical CO₂ corrosion test includes a sample loading device 1, a pressure regulating valve 80, and an auxiliary pressure regulating member 90. The sample loading device 1 is configured to have a sample chamber 10 for accommodating a sample 50. The sample chamber 10 is further configured to receive a supercritical CO₂ fluid so that the sample 50 in the sample chamber 10 undergoes a corrosion test under a supercritical CO₂ atmosphere. The pressure regulating valve 80 is disposed downstream of the sample chamber 10 along a flow direction of the supercritical CO₂ fluid, and is configured to regulate a pressure inside the sample chamber 10 so that the sample 50 in the sample chamber 10 is tested under a first preset pressure. The auxiliary pressure regulating member 90 is configured to increase a pressure at an outlet of the pressure regulating valve 80.

According to embodiments of the present disclosure, by providing the auxiliary pressure regulating member 90, the pressure at the outlet of the pressure regulating valve 80 is increased, thereby reducing a pressure difference between the inlet and outlet of the pressure regulating valve 80. This prevents occurrence of a vaporization phase transition of the supercritical CO₂ at the pressure regulating valve 80 which would otherwise cause a rapid temperature drop of the pressure regulating valve 80, thus facilitating a precise control of the pressure inside the sample chamber 10 by the pressure regulating valve 80.

As shown in FIG. 1, the auxiliary pressure regulating member 90 includes an auxiliary pressure regulating valve 91 (such as a backpressure valve). The auxiliary pressure regulating valve 91 is disposed downstream of the pressure regulating valve 80 along the flow direction of the supercritical CO₂ fluid. The supercritical CO₂ fluid discharged from the outlet of the pressure regulating valve 80 flows to an inlet of the auxiliary pressure regulating valve 91 and is subsequently discharged from an outlet of the auxiliary pressure regulating valve 91 into the atmospheric environment. The auxiliary pressure regulating valve 91 is configured to regulate a pressure on an inlet side of the auxiliary pressure regulating valve 91 (i.e., the outlet side of the pressure regulating valve 80) to a second preset pressure, which is lower than the first preset pressure and higher than atmospheric pressure.

By regulating the pressure at the outlet of the pressure regulating valve 80 to the second preset pressure higher than atmospheric pressure, the auxiliary pressure regulating valve 91 may reduce the pressure difference between the inlet and outlet of the pressure regulating valve 80.

The supercritical CO₂ fluid discharged from the outlet of the auxiliary pressure regulating valve 91 then flows into the atmosphere.

As shown in FIG. 1, the auxiliary pressure regulating member 90 further includes a pressure stabilizing vessel 92. The pressure stabilizing vessel 92 is disposed on a flow path between the pressure regulating valve 80 and the auxiliary pressure regulating valve 91, and the auxiliary pressure regulating valve 91 may regulate a pressure inside the pressure stabilizing vessel 92. Providing the pressure stabilizing vessel 92 may help the pressure regulation of the auxiliary pressure regulating valve 91.

In some embodiments, the pressure stabilizing vessel 92 may be a pressure vessel capable of withstanding pressures above 20 MPa.

In some embodiments, as shown in FIG. 1, the auxiliary pressure regulating member 90 further includes a pressure measuring member 93. The pressure measuring member 93 is disposed on a flow path between the pressure stabilizing vessel 92 and the auxiliary pressure regulating valve 91 to measure the pressure at the inlet of the auxiliary pressure regulating valve 91, so that an opening degree of the auxiliary pressure regulating valve 91 is adjusted according to the pressure measured by the pressure measuring member 93.

In some embodiments, as shown in FIG. 1, the auxiliary pressure regulating member 90 further includes an auxiliary temperature measuring member 94 and an auxiliary electric heating member 95. The auxiliary temperature measuring member 94 is configured to measure the temperature of the auxiliary pressure regulating valve 91. The auxiliary electric heating member 95 is configured to heat the auxiliary pressure regulating valve 91 according to the temperature measured by the auxiliary temperature measuring member 94, so as to raise the temperature of the auxiliary pressure regulating valve 91 to a preset temperature.

The temperature of the pressure regulating valve 80 measured by the auxiliary temperature measuring member 94 and the preset temperature together serve as the basis for the auxiliary electric heating member 95 to heat the auxiliary pressure regulating valve 91. This configuration helps maintain the temperature of the auxiliary pressure regulating valve 91 at the preset temperature, thereby improving the pressure regulation performance of the auxiliary pressure regulating valve 91. Even if a vaporization phase transition of supercritical CO₂ occurs in the auxiliary pressure regulating valve 91 (assuming that such a vaporization phase transition would occur to supercritical CO₂), the supplied heat allows the temperature of the auxiliary pressure regulating valve 91 to recover gradually. Since the auxiliary temperature measuring member 94 regulates the pressure on the inlet side of the auxiliary pressure regulating valve 91, which does not need to be extremely precise, even if a vaporization phase transition of supercritical CO₂ occurs in the auxiliary pressure regulating valve 91 and causes icing of the auxiliary pressure regulating valve 91, it will not affect the function of the auxiliary temperature measuring member 94 in regulating the pressure on the inlet side of the auxiliary pressure regulating valve 91.

As shown in FIG. 1, the system for performing a supercritical CO₂ corrosion test further includes a first temperature measuring member 81 and a first electric heating member 82. The first temperature measuring member 81 is configured to measure the temperature of the pressure regulating valve 80. The first electric heating member 82 is configured to heat the pressure regulating valve 80 according to the temperature measured by the first temperature measuring member 81, so as to raise the temperature of the pressure regulating valve 80 to the preset temperature. According to embodiments of the present disclosure, by providing the auxiliary pressure regulating member 90, the pressure difference between the inlet and outlet of the pressure regulating valve 80 may be reduced, thereby avoiding a phase transition inside the pressure regulating valve 80 which would otherwise cause a rapid temperature drop and icing. When the temperature of the pressure regulating valve 80 decreases slightly due to a pressure drop of the supercritical CO₂ fluid inside the pressure regulating valve 80, the first temperature measuring member 81 and the first electric heating member 82 may help maintain the temperature of the pressure regulating valve 80 at the preset temperature, thereby improving the pressure regulation performance of the pressure regulating valve 80 for the sample chamber 10.

In some embodiments, the preset temperature may be higher than room temperature to ensure the pressure regulation performance of the pressure regulating valve 80 and the auxiliary pressure regulating member 90. For example, the preset temperature may be in a range of 30 °C to 50 °C.

In some embodiments, the second preset pressure may be higher than a saturation vapor pressure of CO₂ corresponding to room temperature. At room temperature of 20 °C, the saturation vapor pressure of carbon dioxide is approximately 5 MPa. When the second preset pressure is higher than the saturation vapor pressure of CO₂ at room temperature, vaporization of CO₂ inside the pressure regulating valve 80 is not intense, and the corresponding heat absorption is not intense, thereby preventing a rapid temperature drop and icing.

Therefore, when the first electric heating member 82 heats the pressure regulating valve 80 to the preset temperature, and the auxiliary pressure regulating valve 91 regulates the pressure at the outlet of the pressure regulating valve 80 to above 5 MPa, icing of the pressure regulating valve 80 caused by excessively low temperature may be effectively avoided, thereby ensuring a precise regulation of the pressure inside the sample chamber 10 by the pressure regulating valve 80.

Experimental tests show that without using the auxiliary pressure regulating valve 91 to increase the pressure at the outlet of the pressure regulating valve 80, the pressure regulation precision of the pressure regulating valve 80 is ±1 MPa; when the auxiliary pressure regulating valve 91 is used to increase the pressure at the outlet of the pressure regulating valve 80, the pressure regulation precision of the pressure regulating valve 80 may reach ±0.5 MPa. Therefore, by providing the auxiliary pressure regulating valve 91 in the present disclosure, the pressure regulation precision of the pressure regulating valve 80 is improved.

In some embodiments, the system for performing a supercritical CO₂ corrosion test further includes a carbon dioxide gas supply member 101, a gas inlet pipeline 110, a precooling member 105, a booster pump 121, a preheating member 131, and a cooling member 141.

The gas inlet pipeline 110 is in communication with a gas inlet interface 20. The carbon dioxide gas supply member 101 is configured to supply gaseous carbon dioxide to the gas inlet pipeline 110, so that the gaseous carbon dioxide is introduced into the gas inlet pipeline 110. The booster pump 121, the precooling member 105, the preheating member 131, and the cooling member 141 are arranged along the gas inlet pipeline 110. The carbon dioxide gas supply member 101 may be a carbon dioxide gas cylinder. The gas inlet pipeline 110 is a high-pressure pipeline.

The booster pump 121 is configured to pressurize the liquid carbon dioxide in the gas inlet pipeline 110 to a test pressure required for the supercritical CO₂ corrosion test, thereby supplying high-pressure supercritical CO₂ required for testing. Since the booster pump 121 may only drive liquid carbon dioxide, the precooling member 105 is disposed upstream of the booster pump 121. The precooling member 105 is used to lower the temperature of carbon dioxide in the gas inlet pipeline 110, so as to liquefy the gaseous carbon dioxide to facilitate driving by the booster pump 121.

The preheating member 131 is disposed downstream of the booster pump 121 to preheat the supercritical CO₂ to approximately the test temperature required for the supercritical CO₂ corrosion test, thereby providing high-temperature and high-pressure supercritical CO₂ required for testing, e.g., up to 600 °C. After preheating, the high-temperature and high-pressure supercritical CO₂ enters the sample chamber 10 and is further heated to the test temperature in the sample chamber 10, then flows through the samples 50 and exits the sample chamber 10. The preheating member 131 may be implemented as an electric heating member.

The cooling member 141 is disposed in a pipeline downstream of the sample chamber 10 to cool the high-temperature supercritical CO₂ to below 40 °C, so as to prevent adverse effects on the downstream valves. The supercritical CO₂ flowing out of the cooling member 141 then sequentially passes through the pressure regulating valve 80, the pressure stabilizing vessel 92, and the auxiliary pressure regulating member 90 before entering the atmospheric environment.

In some embodiments, a gas source valve 102 is further provided in the gas inlet pipeline 110. By opening and closing the gas source valve 102, supply and interruption of gaseous carbon dioxide may be achieved.

In some embodiments, the system for performing a supercritical CO₂ corrosion test further includes a purge valve 103. The purge value 103 is disposed in a pipeline parallel to the gas inlet pipeline 110 to purge air impurities introduced during replacement of the carbon dioxide gas supply member 101.

In some embodiments, a first pressure measuring member 104 is further provided in the gas inlet pipeline 110. The first pressure measuring member 104 is located upstream of the precooling member 105 to detect a pressure at an inlet of the precooling member 105 and to trigger an alarm when the pressure at the inlet of the precooling member 105 becomes too low. The first pressure measuring member 104 may be a digital pressure sensor.

In some embodiments, the system for performing a supercritical CO₂ corrosion test further includes a cool water supply member 106. The cool water supply member 106 is disposed on the precooling member 105 to provide a cooling capacity required by the precooling member 105, thereby controlling the temperature of carbon dioxide in the gas inlet pipeline 110.

In some embodiments, a filtering member 107 is further provided in the gas inlet pipeline 110. The filtering member 107 is disposed between the precooling member 105 and the booster pump 121 to remove impurities from the liquid carbon dioxide, thereby obtaining clean liquid carbon dioxide. The filtering member 107 may be a 15 µm sintered T-type filter.

In some embodiments, a second pressure measuring member 123 is further provided in the gas inlet pipeline 110. The second pressure measuring member 123 is disposed downstream of the booster pump 121 to detect the pressure at the outlet of the booster pump 121 and to trigger an alarm when the pressure at the outlet of the booster pump 121 becomes too high, thereby preventing the booster pump 121 from malfunctioning due to excessively high pressure at the outlet.

In some embodiments, a valve 122 and a check valve 124 are further provided in the gas inlet pipeline 110. The valve 122 and the check valve 124 are sequentially disposed downstream of the second pressure measuring member 123. The valve 122 is configured to control a flow of liquid carbon dioxide in the gas inlet pipeline 110, and the check valve 124 is configured to prevent a reverse flow of liquid carbon dioxide in the gas inlet pipeline 110. The second pressure measuring member 123 may be a digital pressure sensor.

In some embodiments, the system for performing a supercritical CO₂ corrosion test further includes a temperature control member 132. The temperature control member 132 is disposed on the preheating member 131 to display a temperature of the preheating member 131, so that the preheating member 131 adjusts the heating power according to the temperature measured by the temperature control member 132.

In some embodiments, a cool water supply member 106 is provided on the cooling member 141 to provide a cooling source for the cooling member 141.

In some embodiments, a second temperature measuring member 142 is further provided in the gas inlet pipeline 110. The second temperature measuring member 142 is disposed downstream of the cooling member 141 to detect a temperature of the cooled supercritical CO₂ and to trigger an alarm if the temperature of the cooled supercritical CO₂ exceeds 40 °C.

In some embodiments, the system for performing a supercritical CO₂ corrosion test further includes a third pressure measuring member 143, a vent valve 146, and a rupture disc 145. The third pressure measuring member 143, the vent valve 146, and the rupture disc 145 are sequentially disposed in a parallel pipeline connected to the gas inlet pipeline 110. The third pressure measuring member 143 is configured to measure a pressure in the parallel pipeline, so that opening and closing of the vent valve 146 are controlled according to the pressure measured by the third pressure measuring member 143. Through opening and closing of the vent valve 146, the discharge of CO₂ from the pipeline is controlled, thereby achieving the regulation of the pressure in the parallel pipeline. The third pressure measuring member 143 may be a digital pressure sensor. The rupture disc 145 may rupture at a predetermined temperature and pressure to release pressure, thereby preventing apparatus failure caused by excessive internal pressure in the parallel pipeline.

In some embodiments, an exhaust valve 144 is further provided in the gas inlet pipeline 110. The exhaust valve 144 is disposed downstream of the second temperature measuring member 142. By controlling opening and closing of the exhaust valve 144, the flow of supercritical CO₂ may be controlled.

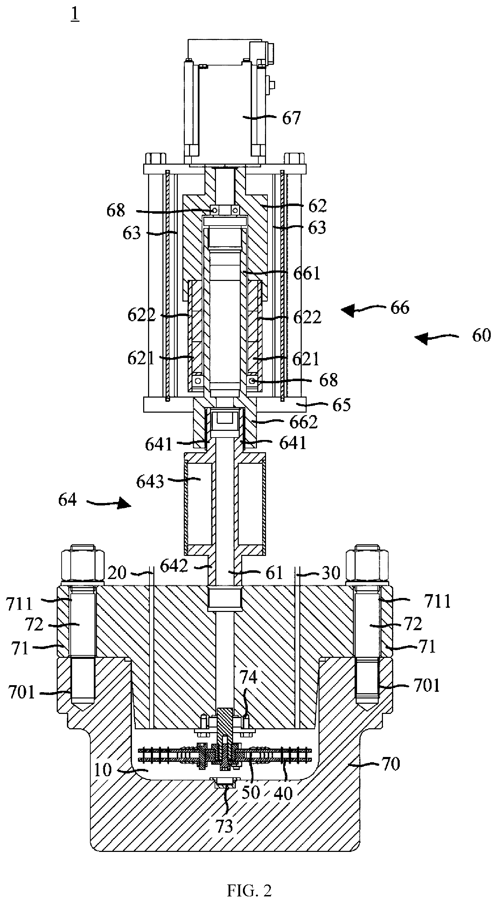

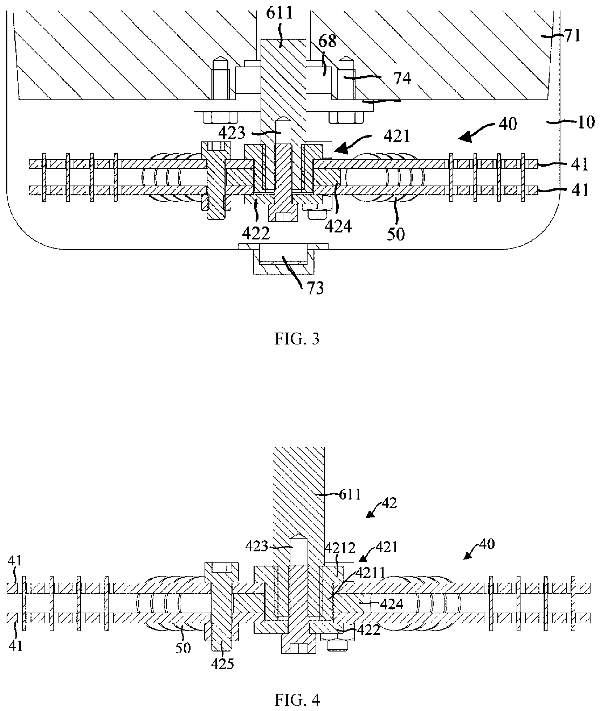

FIG. 2 shows a cross-sectional view of the sample loading device 1 according to an embodiment of the present disclosure, and FIG. 3 shows a partial enlarged view of the sample chamber of the sample loading device in FIG. 2. As shown in FIG. 2 and FIG. 3, the sample loading device 1 may include a sample chamber 10, a gas inlet interface 20, a gas outlet interface 30, a sample retaining assembly 40, and a rotational driving member 60. The gas inlet interface 20 is configured to introduce supercritical CO₂ gas into the sample chamber 10. The gas outlet interface 30 is configured to discharge the supercritical CO₂ gas from the sample chamber 10. The sample retaining assembly 40 is disposed in the sample chamber 10 to hold a plurality of samples 50. The rotational driving member 60 is configured to drive the sample retaining assembly 40 to rotate, so that the supercritical CO₂ in the sample chamber 10 flows at a high velocity along surfaces of the samples 50.

In embodiments of the present disclosure, by driving the sample retaining assembly 40 to rotate using the rotational driving member 60, the samples 50 obtain a particular linear velocity, thereby increasing a relative flow velocity of the supercritical CO₂ in the sample chamber 10 with respect to the samples 50. As a result, the supercritical CO₂ may flow at a high velocity along the surfaces of the samples 50, enabling a high-flow-velocity supercritical CO₂ corrosion test on the samples 50.

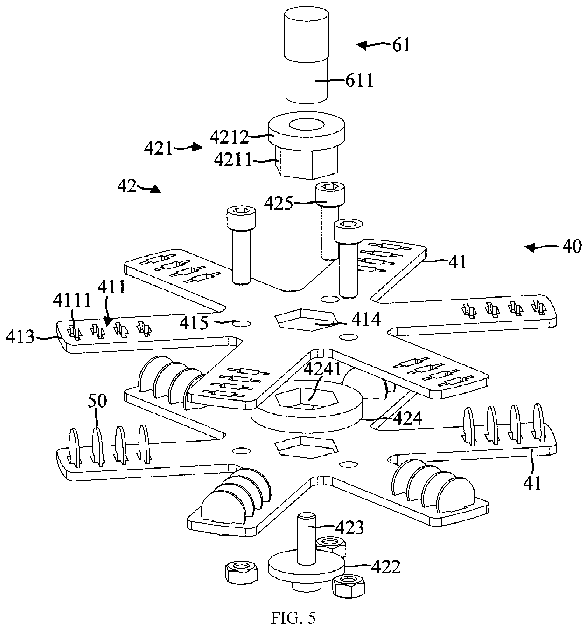

FIG. 4 shows a cross-sectional view of the sample retaining assembly 40 according to an embodiment of the present disclosure, and FIG. 5 shows an exploded view of the sample retaining assembly 40 according to an embodiment of the present disclosure.

As shown in FIG. 4 and FIG. 5, in some embodiments, the sample retaining assembly 40 may include two retaining members 41 arranged opposite to each other, and a connection assembly 42. A plurality of positioning slots 4111 are formed on each retaining member 41. The samples 50 are disc-shaped samples 50, and each disc-shaped sample 50 is inserted and held in corresponding positioning slots 4111 of the two retaining members 41. The connection assembly 42 is used to connect the two retaining members 41 to the rotational driving member 60. In such an embodiment, the rotational driving member 60 is connected to the two retaining members 41 through the connection assembly 42, thereby enabling rotation of the disc-shaped samples 50 that are inserted and held in the corresponding positioning slots 4111 of the two retaining members 41. Consequently, the disc-shaped samples 50 may have a particular linear velocity. The rotational driving member 60 drives the disc-shaped samples 50 to move relative to the supercritical CO₂, so there is no need to directly provide high-flow-velocity CO₂, which reduces the load of CO₂ filling, storage, heat exchange, and other apparatuses, thereby greatly reducing the apparatus manufacturing cost.

In some embodiments, the two retaining members 41 have identical structures. The retaining members 41 may be implemented as an upper six-claw clamp plate and a lower six-claw clamp plate.

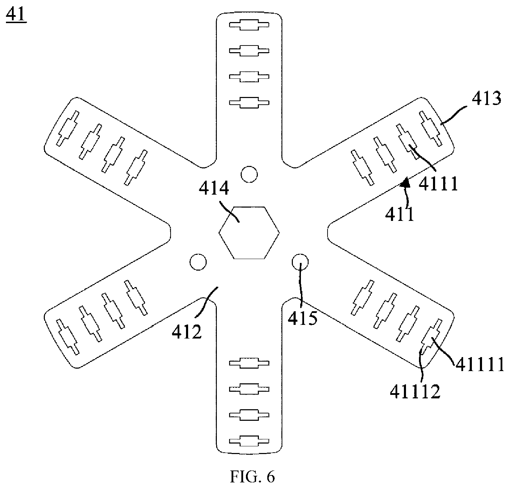

FIG. 6 shows a top view of a retaining member 41 according to an embodiment of the present disclosure. As shown in FIG. 6, the retaining member 41 is formed with a plurality of positioning slot sets 411 distributed along a circumference of the retaining member 41. Each positioning slot set 411 includes a plurality of positioning slots 4111 at different distances from a rotation axis of the retaining member 41. Each positioning slot 4111 in one of the positioning slot sets 411 is located at the same distance from the rotation axis as a corresponding positioning slot 4111 in any other positioning slot set 411.

Since each positioning slot 4111 in one of the positioning slot sets 411 is located at the same distance from the rotation axis as a corresponding positioning slot 4111 in any other positioning slot set 411, the plurality of positioning slot sets 411 allow for a plurality of samples 50 to have the same linear velocity, thereby increasing the number of samples 50 having the same linear velocity.

Since each positioning slot set 411 includes a plurality of positioning slots 4111 at different distances from the rotation axis of the retaining member 41, and the plurality of positioning slots 4111 in the same positioning slot set 411 are arranged along a common horizontal axis passing through the rotation axis, the plurality of samples 50 arranged in the same positioning slot set 411 have the same angular velocity but different linear velocities. Accordingly, the corrosion test of samples under different supercritical CO₂ flow velocity conditions may be simulated in a single test.

In some embodiments, each positioning slot 4111 includes, along its length direction, a middle slot section 41111 and end slot sections 41112 located at both ends of the middle slot section 41111. A width of the middle slot section 41111 is greater than that of the end slot sections 41112. The length direction of the positioning slot 4111 is perpendicular to a radial direction of the retaining member 41. A total length of the positioning slot 4111 is less than a diameter of the disc-shaped sample 50, and the width of the end slot sections 41112 is greater than a thickness of the disc-shaped sample 50, so that when the disc-shaped sample 50 is inserted into the positioning slot 4111, a contact between the positioning slot 4111 and the disc-shaped sample 50 is "line contact" rather than "surface contact". This configuration reduces the contact surface between the positioning slot 4111 and the disc-shaped sample 50, thereby minimizing interference from the sample positioning slot 4111 on the disc-shaped sample 50 during the test, while increasing a contact area between the disc-shaped sample 50 and the supercritical CO₂. As a result, the reaction between the disc-shaped sample 50 and the supercritical CO₂ becomes more sufficient.

As shown in FIG. 4, the retaining member 41 includes a core portion 412 and a plurality of extension portions 413 connected to the core portion 412 along a peripheral edge of the core portion 412. Each positioning slot set 411 is arranged on a corresponding extension portion 413. Such a configuration helps reduce an overall weight of the retaining member 41 while ensuring the number of test samples 50 remain unchanged, which decreases unnecessary friction and inertia when the rotational driving member 60 drives the retaining member 41 to rotate, and further reduces the energy consumption required for the rotational driving member 60 to drive the retaining member 41 to rotate. Meanwhile, reducing the overall weight of the retaining member 41 also contributes to improved stability of the rotational driving member 60 when driving the retaining member 41, thereby ensuring the stability of the rotational driving member 60 when driving the samples 50 to rotate.

In some embodiments, the extension portions 413 extend radially outward from the core portion 412.

In some embodiments, each extension portion 413 has the same shape, and the extension portions 413 are arranged symmetrically with respect to the rotation axis.

In some embodiments, the number of extension portions 413 may be six, and the angle between two adjacent extension portions 413 may be 60°. Such a configuration allows the retaining member 41 to be uniformly stressed in the horizontal direction, preventing the retaining member 41 from tilting in the horizontal direction and enabling a stable horizontal rotation of the retaining member 41.

In some embodiments, the number of positioning slots 4111 provided in each extension portion 413 may be in a range of 2 to 6.

In some embodiments, the positioning slot 4111 farthest from the rotation axis in each extension portion 413 may be located at a distance of 80 mm from the rotation axis, and the distance between two adjacent positioning slots 4111 in the same extension portion 413 may be one-tenth of that distance, i.e., 8 mm.

In some embodiments, the rotational driving member 60 may drive the sample retaining assembly 40 to rotate at a speed of up to 1000 r/min, for example, 1800 r/min. The flow velocity of the samples 50 held by the sample retaining assembly 40 with respect to the supercritical CO₂ may be greater than 5 m/s.

As shown in FIG. 5, the rotational driving member 60 includes a rotating shaft 61, and a central mounting hole 414 is formed at the center of each retaining member 41. The connection assembly 42 may include a connection sleeve member 421, a connection mating member 422, and a fastener 423. The connection sleeve member 421 and the connection mating member 422 are respectively disposed on opposite sides of the two retaining members 41. The connection sleeve member 421 enters into the two central mounting holes 414, and the connection sleeve member 421 is detachably connected to the rotating shaft 61. The fastener 423 detachably connects the connection mating member 422 to the rotating shaft 61, thereby connecting the two retaining members 41 to each other and simultaneously connecting both retaining members 41 to the rotating shaft 61. The connection assembly 42 thus connects the two retaining members 41, ensuring fixation of the two retaining members 41 and stable clamping of the samples 50. Meanwhile, the connection assembly 42 connects the two retaining members 41 to the rotational driving member 60, thereby enabling the rotational driving member 60 to drive the two retaining members 41. Accordingly, the installation and removal of the samples 50 from the sample retaining assembly 40 may be completed simultaneously with the installation and removal of the sample retaining assembly 40 from the rotating shaft 61, thereby simplifying the loading and unloading operations.

In some embodiments, the rotating shaft 61 is provided with a rotating-shaft interface 611. The rotating-shaft interface 611 is configured as a hollow cylinder for detachable connection with the connection sleeve member 421 and the fastener 423. In some embodiments, the rotating-shaft interface 611 is inserted into an interior of the connection sleeve member 421 and is detachably connected to the connection sleeve member 421. In some embodiments, the detachable connection between the rotating-shaft interface 611 and the connection sleeve member 421 may be a threaded connection. In some embodiments, the detachable connection between the rotating-shaft interface 611 and the connection sleeve member 421 may be a threaded connection.

In some embodiments, the connection sleeve member 421 includes a sleeve body 4211 and an engaging portion 4212 provided on the sleeve body. The engaging portion 4212 has an outer diameter greater than an inner diameter of the central mounting hole 414 and is configured to engage with one side of the retaining member 41 adjacent to the rotating shaft 61. The connection mating member 422 is an annular ring, which has an outer diameter greater than the inner diameter of the central mounting hole 414. The engaging portion 4212 and the connection mating member 422 are respectively configured to clamp the two retaining members 41. The sleeve body 4211 has a size smaller than or equal to the inner diameter of the central mounting hole 414 so as to be insertable into the central mounting hole 414. The rotating-shaft interface 611 of the rotating shaft 61 is inserted into the sleeve body 4211 and threadedly connected with the sleeve body 4211. The fastener 423 passes through the connection mating member 422 from the other side and enters into the rotating-shaft interface 611 to be threadedly connected with the rotating-shaft interface 611.

In some embodiments, the fastener 423 may be a locking screw, and the connection mating member 422 may be a locking washer. For example, the fastener 423 may be an M6 hexagon socket locking screw.

The retaining member 41 may be a ceramic member.

As shown in FIG. 5, the connection assembly 42 further includes a spacer member 424 disposed between the two retaining members 41. The spacer member 424 is provided with a spacer-member mounting hole 4241. The connection sleeve member 421 is inserted into the two central mounting holes 414 and the spacer-member mounting hole 4241. A plurality of connecting members 425 are arranged on a radial outer side of the spacer member 424 to connect the two retaining members 41. The spacer member 424 disposed between the two retaining members 41 may maintain a fixed distance between the two retaining members 41 during rotation of the sample retaining assembly 40, ensuring stability of the samples 50 between the two retaining members 41. Moreover, by setting a height of the spacer member 424, the samples 50 may be movably positioned within the positioning slots 4111 of the two retaining members 41, thereby preventing the retaining members 41 from exerting excessive stress on the samples 50 and avoiding damage to the samples 50.

In some embodiments, cross sections of the central mounting hole 414, the spacer-member mounting hole 4241, and the sleeve body 4211 are all hexagonal, so as to prevent relative rotation between the sleeve body 4211 and the retaining members 41.

In some embodiments, the retaining member 41 is provided with a plurality of retaining-member outer mounting holes 415 on the radial outer side of the spacer member 424, and each retaining-member outer mounting hole 415 is used to accommodate a connecting member 425.

In some embodiments, the connecting member 425 may include a screw and a nut. For example, when the screw is an M6 hexagon socket fixing screw, the nut is an M6 hexagon socket fixing nut.

As shown in FIG. 2, the rotational driving member 60 may further include a driving member 67, a rotating drum 62, and a magnet 621. The driving member 67 may drive the rotating drum 62 to rotate, and the magnet 621 is mounted on the rotating drum 62. The rotating shaft 61 is located on a radial inner side of the rotating drum 62 and the magnet 621, so as to rotate together with the rotating drum 62 under a magnetic force of the magnet 621. A bearing 68 is disposed between the rotating shaft 61 and the rotating drum 62. The driving member 67 may be a rotary motor. Theoretically, by adjusting a rotation speed of the rotary motor, the samples may obtain an arbitrary linear velocity relative to the supercritical CO₂.

In some embodiments, the rotational driving member 60 may further include a connection cylinder 622 connected to the rotating drum 62, and the magnet 621 may be disposed on the connection cylinder 622.

In some embodiments, the rotational driving member 60 may drive the rotating drum 62 to rotate at a speed exceeding 1000 r/min (for example, 1800 r/min) and may operate continuously for thousands of hours (for example, one year). When the rotating drum 62 rotates at a high speed for a long period of time, the magnet 621 disposed on the rotating drum 62 may gradually heat up. When the temperature of the magnet 621 is excessively high, demagnetization may occur, causing the driving member 67 to fail to drive the rotating shaft 61 to rotate. To solve this problem, the rotational driving member 60 may further include a rotating-drum cooling member 63 configured to cool the rotating drum 62 and the magnet 621, thereby preventing demagnetization of the magnet 621 and ensuring long-term operation of the sample loading device 1.

As shown in FIG. 2, the sample loading device 1 may further include a main body 70 and a cover 71. The main body 70 has a top opening. The cover 71 is configured to seal the top opening, thereby forming the sample chamber 10 together with the main body 70. The rotating shaft 61 passes through the cover 71 and enters into the sample chamber 10. A bearing 68 is disposed between the rotating shaft 61 and the cover 71. The bearing 68 may be disposed on a bearing seat, and then connected to the cover 71 through a fastener 74.

The sample 50 may be a disc-shaped sample with a diameter of 16 mm and a thickness of 1 mm.

In embodiments of the present disclosure, the sample loading device 1 may be configured with a small volume for the sample chamber 10, for example, about 1 L, which may effectively reduce heat loss, decrease carbon dioxide consumption, and eliminate interference caused by temperature differences among the samples at different positions due to an excessively large volume and overly long test section.

When the volume of the sample chamber 10 is set to approximately 1 L, the theoretical value of carbon dioxide consumption per run of the supercritical CO₂ corrosion test is 0.1 kg. Compared with high-flow-velocity supercritical carbon dioxide corrosion test devices in the related art, the theoretical value of carbon dioxide consumption per run of the former is one-thousandth of that of the latter.

The rotational driving member 60 further includes a rotating-shaft cooling member 64 configured to cool the rotating shaft 61. The rotating-shaft cooling member 64 is connected to the cover 71 below the rotating drum 62. The rotating-shaft cooling member 64 is configured to lower a surface temperature of the rotating shaft 61, prevent heat inside the sample chamber 10 from spreading to the magnet 621, and avoid demagnetization of the magnet 621.

The gas inlet interface 20 and the gas outlet interface 30 are formed on the cover 71 and pass through the cover 71. The gas inlet interface 20 and the gas outlet interface 30 may be disposed on opposite radial sides of the rotating shaft 61.

As shown in FIG. 2, in some embodiments, the device further includes a fixing member 72. The cover 71 is provided with a through hole 711, and the main body 70 is provided with a recess 701 corresponding to the through hole 711 of the cover 71. The fixing member 72 passes through the through hole 711 of the cover 71 and is detachably connected to the corresponding recess 701 of the main body 70, thereby enabling assembly and disassembly of the cover 71 and the main body 70.

In some embodiments, the main body 70 is provided with a heating member and a temperature measuring member. The heating member is configured to heat the sample chamber 10, so that the supercritical CO₂ inside the sample chamber 10 is at a preset test temperature. The temperature measuring member is configured to measure the temperature of the sample chamber 10, so that the heating member adjusts the heating power according to the temperature measured by the temperature measuring member. The heating member of the main body 70 may be an electric heating member.

In some embodiments, the fixing member 72 may include a nut and a bolt for fastening the connection between the cover 71 and the main body 70.

As shown in FIG. 3, in some embodiments, a bottom wall of the sample chamber 10 is provided with a stationary sample slot 73, and the stationary sample slot 73 is disposed directly below the rotating shaft 61. The stationary sample slot 73 is used to hold the sample 50. During the test, the sample 50 positioned directly below the rotating shaft 61 lies in a region of minimum airflow inside the sample chamber 10, which is equivalent to the sample 50 being in a stationary state.

As shown in FIG. 2, the rotational driving member 60 further includes a driving mounting member 65 and a spacer sleeve 66. The driving member 67 and the rotating-drum cooling member 63 are disposed on the driving mounting member 65. The spacer sleeve 66 is connected to the rotating-shaft cooling member 64 and the driving mounting member 65 and is positioned between the rotating shaft 61 and the rotating drum 62. A bearing 68 is disposed between the connection cylinder 622 and the spacer sleeve 66 to improve rotation stability of the rotating drum 62 and the magnet 621.

The rotating-shaft cooling member 64 is connected to the spacer sleeve 66, and provides support for the spacer sleeve 66 and the driving mounting member 65.

The rotating-shaft cooling member 64 and the rotating-drum cooling member 63 may employ water cooling to reduce temperature.

In some embodiments, the spacer sleeve 66 includes a first connection portion 661 and a second connection portion 662. The first connection portion 661 is located between the rotating shaft 61 and the rotating drum 62 as well as the magnet 621, and the second connection portion 662 is used to connect the rotating-shaft cooling member 64 and the driving mounting member 65 to ensure a stable connection between the rotating-shaft cooling member 64 and the driving mounting member 65.

In some embodiments, the rotating-shaft cooling member 64 includes a first cooling connection portion 641, a cooling body 643, and a second cooling connection portion 642. The first cooling connection portion 641 is connected to the second connection portion 662 of the spacer sleeve 66. The cooling body 643 is located on an outer side of the rotating shaft 61 to lower a surface temperature of the rotating shaft 61. The second cooling connection portion 642 is connected to the cover 71.

By providing the first cooling connection portion 641, the rotational driving member 60 may be integrally mounted on the cover 71, allowing the cover 71 and the rotational driving member 60 to be moved as a whole, thus facilitating assembly and disassembly of the sample retaining assembly 40 while preventing heat transfer from the interior of the sample chamber 10 to the magnet 621.

Embodiments of the present disclosure further provide a method for performing a supercritical CO₂ corrosion test, which utilizes the system for performing a supercritical CO₂ corrosion test provided in embodiments of the present disclosure. The test method includes: introducing supercritical CO₂ into the sample chamber 10, where the supercritical CO₂ sequentially flows through the sample chamber 10, the pressure regulating valve 80, and the auxiliary pressure regulating member 90 before being discharged into the atmospheric environment; adjusting the pressure regulating valve 80 so that the pressure in the sample chamber is at a first preset pressure; adjusting the auxiliary pressure regulating member 90 so that the pressure at the outlet of the pressure regulating valve 80 is at a second preset pressure, where the second preset pressure is lower than the first preset pressure and higher than atmospheric pressure; and thereafter, performing a supercritical CO₂ corrosion test.

In the method of embodiments of the present disclosure, the pressure inside the sample chamber 10 is regulated by the pressure regulating valve 80, so that the pressure in the sample chamber 10 is maintained at the preset pressure, thereby maintaining the sample chamber 10 under the high-pressure condition required for the supercritical CO₂ corrosion test. Meanwhile, the auxiliary pressure regulating member 90 may increase the pressure at the outlet of the pressure regulating valve 80 to the second preset pressure, thereby reducing the pressure difference between the inlet and outlet of the pressure regulating valve 80. This configuration prevents a vaporization phase transition of supercritical CO₂ at the pressure regulating valve 80 which would otherwise cause a rapid temperature drop of the pressure regulating valve 80, thereby facilitating precise control of pressure in the sample chamber 10 by the pressure regulating valve 80 and maintaining stable pressure of the supercritical CO₂ inside the sample chamber 10.

In some embodiments, before performing the supercritical CO₂ corrosion test, each heating member is turned on to heat the supercritical CO₂ to a preheating temperature, and the rotational driving member 60 is turned on to drive the sample retaining assembly 40 to rotate at a preset rotation speed, after which the supercritical CO₂ corrosion test begins.

In some embodiments, the pressure regulating valve 80 may control the pressure inside the sample chamber 10 to a target pressure (which is typically greater than or equal to 15 MPa), while the auxiliary pressure regulating valve 91 may regulate the pressure inside the pressure stabilizing vessel 92 to 5~6 MPa.

In the prior art, typically a single backpressure valve (i.e., the pressure regulating valve 80) is provided to control the pressure inside the sample chamber 10. The pressure difference between the inlet and outlet of the backpressure valve equals the pressure inside the sample chamber 10 minus atmospheric pressure. For example, if the pressure inside the sample chamber 10 is 25 MPa, the pressure difference between the inlet and outlet of the backpressure valve is 25 - 0 = 25 MPa. Such a large pressure difference causes rapid vaporization of carbon dioxide. During the vaporization process, carbon dioxide absorbs a large amount of heat, resulting in a temperature drop and icing of the valve body, which reduces the pressure regulation precision of the valve.

The present disclosure employs two backpressure valves to reduce the pressure difference between the inlet and outlet of a single backpressure valve. For example, if the pressure inside the sample chamber 10 is 25 MPa, a second-stage backpressure valve (i.e., the auxiliary pressure regulating valve 91) may increase the pressure at the outlet of a first-stage backpressure valve (i.e., the pressure regulating valve 80) to 5 MPa. Accordingly, the pressure difference between the inlet and outlet of the first-stage backpressure valve is 25 - 5 = 20 MPa, and the pressure difference between the inlet and outlet of the second-stage backpressure valve is 5 - 0 = 5 MPa. Both pressure differences between the inlet and outlet of the backpressure valves are smaller than that of a single backpressure valve used for pressure control. Through two-stage pressure reduction, the pressure difference between the inlet and outlet of each backpressure valve is reduced, so that the carbon dioxide passing through the inlet and outlet of the backpressure valve does not experience drastic phase transition, thereby minimizing heat absorption of carbon dioxide and the corresponding temperature drop of the valve body. As a result, the pressure control precision of the valve may reach ±0.5 MPa.

In embodiments of the present disclosure, the pressure stabilizing vessel 92 is provided to increase a pipeline volume at the inlet section of the auxiliary pressure regulating valve 91. When the auxiliary pressure regulating valve 91 controls pressure and releases gas, the presence of the pressure stabilizing vessel 92 prevents sharp pressure fluctuations at the inlet section of the auxiliary pressure regulating valve 91, which helps limit the pressure fluctuation within ±0.5 MPa. If the pressure stabilizing vessel 92 is omitted, when the auxiliary pressure regulating valve 91 controls pressure and releases gas, the pressure fluctuation at the inlet section of the auxiliary pressure regulating valve 91 may reach ±2 MPa or more, thereby adversely affecting the accuracy of pressure regulation.

The volume of the pressure stabilizing vessel 92 may be 200 ml, for example.

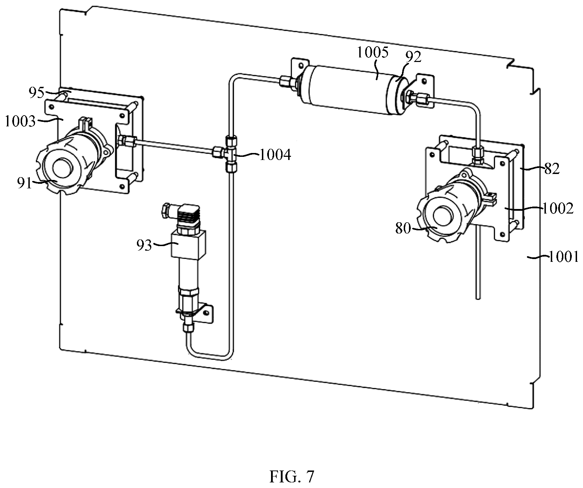

As shown in FIG. 7, in some embodiments, the system for performing a supercritical CO₂ corrosion test may further include a pressure-stabilizing heating member 1005 configured to heat the pressure stabilizing vessel 92 so that the carbon dioxide in the pressure stabilizing vessel 92 is maintained in a gaseous state. By providing the pressure-stabilizing heating member 1005, the pressure stabilizing vessel 92 contains only carbon dioxide gas and no carbon dioxide liquid. Consequently, when the auxiliary pressure regulating valve 91 releases gas, no liquid-to-gas phase transition of carbon dioxide occurs in the pressure stabilizing vessel 92, which further improves the pressure control precision of the auxiliary pressure regulating valve 91.

Specifically, when the auxiliary pressure regulating valve 91 regulates the pressure inside the pressure stabilizing vessel 92 to 5~6 MPa, the pressure-stabilizing heating member 1005 may raise the temperature of the pressure stabilizing vessel 92 to 50 °C~100 °C, so that the carbon dioxide inside the pressure stabilizing vessel 92 remains in a gaseous state, with no liquid carbon dioxide.

In some embodiments, the system for performing a supercritical CO₂ corrosion test further includes a mounting plate 1001. The pressure regulating valve 80 and the auxiliary pressure regulating member 90 may be mounted on the mounting plate 1001.

In some embodiments, the system for performing a supercritical CO₂ corrosion test further includes a first fixing frame 1002 and a second fixing frame 1003. The pressure regulating valve 80 and the first electric heating member 82 may be mounted on the mounting plate 1001 through the first fixing frame 1002, while the auxiliary pressure regulating valve 91 and the auxiliary electric heating member 95 may be mounted on the mounting plate 1001 through the second fixing frame 1003.

The pressure stabilizing vessel 92 and the pressure measuring member 93 may both be mounted on the mounting plate 1001 by means of mounting members.

The pipeline in communication with the gas outlet of the pressure stabilizing vessel 92, the pipeline in communication with the pressure measuring member 93, and the pipeline in communication with the gas inlet of the auxiliary pressure regulating valve 91 may be connected via a three-way connector 1004.

The pressure measuring member 93 may measure the pressure inside the pressure stabilizing vessel 92.

In some embodiments, the first electric heating member 82 and the auxiliary electric heating member 95 may each be implemented as a heating plate. Because the valve core of a backpressure valve is located near the bottom of the valve body, and the bottom surface of the valve is flat and has a regular shape, the heating plate may be disposed at the bottom of the valve body to increase the heating area. A temperature control member may be used to adjust the heating temperature of the heating plate to an arbitrary temperature in a range of room temperature to 100 °C, thereby preheating the valve. Once the backpressure valve is preheated, the heat supplied by the heating plate may offset part of the heat absorbed by the valve body, which helps stabilize the pressure control precision of the valve within ±0.5 MPa.

The process and method for performing a supercritical CO₂ corrosion test using the system in the present disclosure are further described below with reference to the accompanying drawings and specific embodiments.
(1) Safety inspection: after powering on the apparatus, check whether the display status of each measuring member is normal and whether the water level of the cool water supply member 106 is normal, close all valves, and check whether all test parameters and alarm parameters of the apparatus are set correctly.
(2) Placing samples: assemble the samples 50, the sample retaining assembly 40, and the rotating-shaft interface 611 on the cover 71, and then place the sample retaining assembly 40 into the main body 70.
(3) Sealing the sample chamber 10: check the contact surface between the cover 71 and the main body 70 for any solid particles or foreign objects, check whether the fixing member 72 is installed correctly, and fasten the cover 71 to the main body 70 using the fixing member 72 to seal the sample chamber 10.
(4) Introducing carbon dioxide: supply gaseous carbon dioxide to the gas inlet pipeline 110 using the carbon dioxide gas supply member 101. Open the gas source valve 102, discharge the introduced air through the purge valve 103, and observe whether the reading of the first pressure measuring member 104 is normal. Slowly open the valve 122 to inject carbon dioxide into the sample chamber 10, and observe whether the readings of the second pressure measuring member 123 and the third pressure measuring member 143 are normal. Open the exhaust valve 144, and open the vent valve 146 to purge and replace the air inside the sample chamber 10.
(5) Controlling test conditions: close the vent valve 146. Power on the cool water supply member 106 to provide cooling capacity for the precooling member 105 and the cooling member 141 so that the precooling member 105 liquefies the gaseous carbon dioxide into liquid carbon dioxide, and the cooling member 141 lowers the temperature of carbon dioxide in the pipeline. Power on each electric heating member so that each temperature control member automatically adjusts the power of the electric heating member according to the preset temperature. Start the booster pump 121 and adjust the knob of the pressure regulating valve 80 and the knob of the auxiliary pressure regulating valve 91 until the pressure inside the sample chamber 10 reaches the preset test pressure and the pressure inside the pressure stabilizing vessel 92 reaches the preset pressure.
(6) Adjusting rotation speed: start the driving member 67, adjust the rotation speed of the driving member 67 according to different linear velocity requirements, and begin the test.
(7) Test completion: after the test, turn off the driving member 67, the gas source valve 102, and the booster pump 121. Slowly rotate the knob of the pressure regulating valve 80 and the knob of the auxiliary pressure regulating valve 91 counterclockwise, so that the CO₂ in the test system is discharged into the atmospheric environment after sequentially passing through the pressure regulating valve 80 and the auxiliary pressure regulating valve 91. When the pressures measured by the first pressure measuring member 104, the second pressure measuring member 123, and the third pressure measuring member 143 all drop to zero, turn off the cool water supply member 106 and each electric heating member. After the temperature of the sample chamber 10 drops to room temperature, unscrew the fixing member 72, open the cover 71, and remove the samples 50.

For embodiments of the present disclosure, it should also be noted that, in the case of no conflict, the embodiments of the present disclosure and the features in the embodiments may be combined to form additional embodiments.

The above descriptions merely represent specific implementations of the present disclosure, but the scope of protection of the present disclosure is not limited thereto. The scope of protection of the present disclosure shall be determined by the claims.

## Claims

1. A system for performing a supercritical CO₂ corrosion test, comprising:
a sample loading device configured to have a sample chamber for accommodating a sample, wherein the sample chamber is further configured to receive a supercritical CO₂ fluid so that the sample in the sample chamber undergoes a corrosion test under a supercritical CO₂ atmosphere;
a pressure regulating valve disposed downstream of the sample chamber along a flow direction of the supercritical CO₂ fluid, wherein the pressure regulating valve is configured to regulate a pressure inside the sample chamber so that the sample in the sample chamber is tested under a first preset pressure; and
an auxiliary pressure regulating member configured to increase a pressure at an outlet of the pressure regulating valve.

2. The system of claim 1, wherein the auxiliary pressure regulating member comprises:
an auxiliary pressure regulating valve disposed downstream of the pressure regulating valve along the flow direction of the supercritical CO₂ fluid, wherein the supercritical CO₂ fluid discharged from the outlet of the pressure regulating valve flows to an inlet of the auxiliary pressure regulating valve, and is discharged from an outlet of the auxiliary pressure regulating valve to an atmospheric environment;
wherein the auxiliary pressure regulating valve is configured to regulate a pressure on an inlet side of the auxiliary pressure regulating valve to a second preset pressure, and the second preset pressure is lower than the first preset pressure and higher than an atmospheric pressure.

3. The system of claim 2, wherein the auxiliary pressure regulating member further comprises:
a pressure stabilizing vessel disposed on a flow path between the pressure regulating valve and the auxiliary pressure regulating valve, wherein the auxiliary pressure regulating valve is configured to regulate a pressure inside the pressure stabilizing vessel.

4. The system of claim 3, wherein the auxiliary pressure regulating member further comprises:
a pressure measuring member disposed on a flow path between the pressure stabilizing vessel and the auxiliary pressure regulating valve, wherein the pressure measuring member is configured to measure a pressure at the inlet of the auxiliary pressure regulating valve, so as to adjust an opening degree of the auxiliary pressure regulating valve according to the pressure measured by the pressure measuring member.

5. The system of claim 2, wherein the auxiliary pressure regulating member further comprises:
an auxiliary temperature measuring member configured to measure a temperature of the auxiliary pressure regulating valve; and
an auxiliary electric heating member configured to heat the auxiliary pressure regulating valve according to the temperature measured by the auxiliary temperature measuring member, so as to raise the temperature of the auxiliary pressure regulating valve to a preset temperature.

6. The system of claim 5, wherein the preset temperature is higher than room temperature, and the second preset pressure is higher than a saturation vapor pressure of CO₂ at room temperature.

7. The system of claim 2, further comprising:
a first temperature measuring member configured to measure a temperature of the pressure regulating valve; and
a first electric heating member configured to heat the pressure regulating valve according to the temperature measured by the first temperature measuring member, so as to raise the temperature of the pressure regulating valve to a preset temperature.

8. The system of claim 1, wherein the sample loading device comprises:
a main body having a top opening;
a cover configured to seal the top opening so as to form the sample chamber together with the main body;
a gas inlet interface configured to introduce supercritical CO₂ gas into the sample chamber;
a gas outlet interface configured to discharge the supercritical CO₂ gas from the sample chamber;
a sample retaining assembly disposed in the sample chamber and configured to hold a plurality of samples; and
a rotational driving member configured to drive the sample retaining assembly to rotate, thereby enabling the supercritical CO₂ in the sample chamber to flow at a high velocity along surfaces of the samples.

9. The system of claim 8, wherein the sample retaining assembly comprises:
two retaining members arranged opposite to each other, wherein each retaining member is formed with a plurality of positioning slots, the samples are disc-shaped samples, and each disc-shaped sample is inserted and held in corresponding positioning slots of the two retaining members; and
a connection assembly configured to connect the two retaining members to each other and connect the two retaining members to the rotational driving member.

10. The system of claim 9, wherein the retaining member is formed with a plurality of positioning slot sets distributed along a circumference of the retaining member, each of the positioning slot sets comprises a plurality of positioning slots located at different distances from a rotation axis of the retaining member, and each positioning slot in any one of the positioning slot sets is located at the same distance from the rotation axis as a corresponding positioning slot in any other positioning slot set.

11. The system of claim 10, wherein the retaining member comprises a core portion and a plurality of extension portions connected to the core portion along a peripheral edge of the core portion, and each of the positioning slot sets is disposed on a corresponding one of the extension portions.

12. The system of claim 3, wherein the auxiliary pressure regulating member further comprises:
a pressure-stabilizing heating member configured to heat the pressure stabilizing vessel to maintain the carbon dioxide inside the pressure stabilizing vessel in a gaseous state.

13. A system for performing a supercritical CO₂ corrosion test, comprising:
a carbon dioxide gas supply member and a gas inlet pipeline, wherein the carbon dioxide gas supply member is configured to supply gaseous carbon dioxide to the gas inlet pipeline so that the gaseous carbon dioxide is introduced into the gas inlet pipeline;
a precooling member configured to lower a temperature of carbon dioxide in the gas inlet pipeline, so as to liquefy the gaseous carbon dioxide;
a booster pump configured to pressurize the liquid carbon dioxide in the gas inlet pipeline to a test pressure corresponding to the supercritical CO₂ corrosion test, so as to provide high-pressure supercritical CO₂ required for testing;
a sample loading device configured to have a sample chamber for accommodating a sample, wherein the sample chamber is further configured to receive a supercritical CO₂ fluid so that the sample in the sample chamber undergoes a corrosion test under a supercritical CO₂ atmosphere;
a cooling member disposed in a pipeline downstream of the sample chamber, wherein the cooling member is configured to cool high-temperature supercritical CO₂ to below 40 °C;
a pressure regulating valve disposed downstream of the sample chamber along a flow direction of the supercritical CO₂ fluid, wherein the pressure regulating valve is configured to regulate a pressure inside the sample chamber so that the sample in the sample chamber is tested under a first preset pressure; and
an auxiliary pressure regulating member configured to increase a pressure at an outlet of the pressure regulating valve.

14. The system of claim 13, further comprising:
a preheating member disposed downstream of the booster pump, wherein the preheating member is configured to preheat the supercritical CO₂ to a temperature close to a test temperature of the supercritical CO₂ corrosion test, so as to provide high-temperature and high-pressure supercritical CO₂ required for testing;
wherein the preheated high-temperature and high-pressure supercritical CO₂ enters the sample chamber and is further heated to the test temperature in the sample chamber, then flows through the sample and exits the sample chamber.

15. A method for performing a supercritical CO₂ corrosion test, implemented by using the system for performing a supercritical CO₂ corrosion test of any one of claims 1 to 14, the method comprising:
introducing supercritical CO₂ into the sample chamber, wherein the supercritical CO₂ sequentially flows through the sample chamber, the pressure regulating valve, and the auxiliary pressure regulating member before being discharged into the atmospheric environment;
regulating the pressure regulating valve so that a pressure inside the sample chamber is maintained at a first preset pressure;
regulating the auxiliary pressure regulating member so that a pressure at an outlet of the pressure regulating valve is maintained at a second preset pressure, wherein the second preset pressure is lower than the first preset pressure and higher than an atmospheric pressure; and
performing a supercritical CO₂ corrosion test.
